# EUROPÄISCHE PATENTSCHRIFT

(11) **EP 1 291 304 B1**
(45) Veröffentlichungstag und Bekanntmachung des Hinweises auf die Patenterteilung: **03.05.2006**
(21) Anmeldenummer: 02405750.7
(22) Anmeldetag: 02.09.2002
(51) Int. Cl.: B65G 47/248, B65G 15/14

(54) **Fördervorrichtung zum Transportieren von einseitig offenen Behältern**
Conveyor for transporting containers open on one side
Convoyeur pour transporter de conteneurs ouverts sur un côté

(30) Priorität: 06.09.2001 CH 20011654
(43) Veröffentlichungstag der Anmeldung: 12.03.2003
(73) Patentinhaber: VT Zurich Marketing Pte. Ltd., Singapore 1232 (SG)
(72) Erfinder: Egger, Walter C., 6353 Weggis (CH)
(74) Vertreter: Rottmann, Maximilian

(56) Entgegenhaltungen:
- WO-A-97/10163
- FR-A- 2 683 213
- GB-A- 1 203 977
- US-A- 3 767 028
- US-A- 4 479 574
- US-A- 4 798 281
- US-A- 5 492 216

## Beschreibung

Die Erfindung betrifft eine Fördervorrichtung zum Transportieren von einseitig offenen Behältern sowie die Verwendung einer derartigen Fördervorrichtung.

Eine derart gestaltete Fördervorrichtung wird beispielsweise dazu verwendet, um einseitig offene Behälter wie Flaschen, Dosen oder Gläser zu einer Behandlungsstation und danach zu einer Abfüllstation zu transportieren. Bevor der gewünschte Inhaltsstoff eingefüllt werden kann, müssen die Behälter üblicherweise vorbehandelt werden. Unter Vorbehandeln bzw. Behandeln ist im vorliegenden Fall insbesondere ein Entleeren und/oder Reinigen, Erhitzen oder Sterilisieren der Behälter zu verstehen, wobei hier insbesondere von Behältern für die Lebensmittelindustrie, für die Getränkeindustrie, für die chemische sowie pharmazeutische Industrie die Rede ist. Üblicherweise müssen die mittels einer Fördervorrichtung in einer aufrechten Ausgangsstellung geförderten Behälter für diese Vorbehandlung von der Ausgangsstellung in eine Behandlungsstellung gebracht werden, in der ihre Öffnung im wesentlichen nach unten gerichtet ist, so dass beispielsweise eine zur Reinigung in die Behälter eingebrachte Reinigungsflüssigkeit, der Schwerkraft folgend, über die Öffnung wieder aus dem Behälter austreten kann. Nach dieser Behandlung werden die Behälter üblicherweise wieder in die aufrechte Ausgangsposition zurückgedreht, in der sie danach ab- bzw. aufgefüllt werden können.

Aus der EP 0 576 398 ist eine gattungsgemässe Vorrichtung zum Reinigen von einseitig offenen Behältern bekannt. Diese weist einen Schleppkettenförderer auf, mittels welchem die Behälter an einem Reinigungsaggregat vorbeigeführt werden. Der Schleppkettenförderer weist zwei umlaufenden Förderketten auf, welche sich längs der Förderbahn parallel und mit Abstand voneinander gleichsinnig bewegen. Die Förderbahn des Schleppkettenförderers verläuft in Form einer vertikalen Schleife vom Einlaufende in einem ersten Bogenabschnitt nach oben, dann längs eines geradlinigen Abschnitt weiter in einer zur Einlaufrichtung entgegengesetzten Richtung und schliesslich in einem zweiten Bogenabschnitt nach unten zum Auslaufende. Die Bogenabschnitte der Förderbahn sind seitlich gegeneinander versetzt, so dass der geradlinige Abschnitt schräg zwischen dem ersten und zweiten Bogenabschnitt verläuft. Entlang des geradlinigen Abschnitts, in welchem die Behälter mit ihrer Öffnung nach unten befördert werden, ist das Reinigungsaggregat angeordnet. Dieses weist durch die Behälter betätigte Mitnehmer aufweist, welche die zum Reinigen eines Behälters vorgesehene Strahldüse zwangsläufig auf die Öffnung des jeweiligen Behälters ausrichtet. Das Zu- und Abführen der Behälter erfolgt über Bandförderer, auf welchen die Behälter stehend transportiert werden.

Obwohl sich derartige Vorrichtungen zum Reinigen von einseitig offenen Behältern in der Praxis bewährt haben, wäre es wünschenswert, wenn der Platzbedarf der Fördervorrichtung verringert würde und die Behälter mit einer einzigen Fördervorrichtung, ohne die Übergabe von einem Band- an einen Schleppkettenförderer und vice versa, transportiert werden könnten.

Aus der US 4,479,574 ist eine Vorrichtung zum Transportieren von Behältern bekannt, die mit einem Einlaufabschnitt, einem Mittelabschnitt zum Behandeln der Behälter und einem Auslaufabschnitt versehen ist. Zum Führen der Behälter ist ein Führungskäfig vorgesehen, der aus mehreren Führungsstangen besteht und dessen innere Form an die äussere Form der zu transportierenden Behälter angepasst ist. Zum Transportieren der Behälter verläuft auf beiden Seiten des Führungskäfigs ein Gurt, der die Behälter seitlich kraftschlüssig erfasst und mitnimmt. Der Führungskäfig ist derart ausgebildet, dass die Behälter im Einlaufabschnitt entlang einer in Förderrichtung verlaufenden Längsmittenachse um 180° in die Behandlungsposition gedreht und im Auslaufabschnitt um 180° weitergedreht werden, so dass sie danach wieder die ursprüngliche, aufrechte Lage einnehmen. Nachteilig an einer derartigen Vorrichtung ist, dass nur eine Behältergrösse damit transportiert werden kann, da die Form des Führungskäfigs an die Behälter angepasst sein muss. Ausserdem besteht die Gefahr, dass sich die Behälter im Führungskäfig verkanten und verklemmen.

In der US 4,798,281 ist ein Schleppkettenförderer mit zwei parallel verlaufenden Schleppketten zum Transportieren von einseitig offenen Behältern offenbart. An den beiden Schleppketten stehen in kraftschlüssiger Verbindung mit einer Vielzahl von elastischen Greifern, die aus einem Hohlprofilstück aus Kautschuk gefertigt sind. Der jeweilige Greifer ist an einer Platte befestigt, welche ihrerseits an einem U-förmigen Bügel befestigt ist. Zum Führen des genannten Bügels entlang der Förderstrecke sind Gleitschienen vorgesehen. Dieses Hohlprofilstück weist an der Grifffläche mehrere, parallel zur Profilachse verlaufende Nuten auf. Diese Nuten dienen als Ablaufrillen für verdrängte Flüssigkeit.

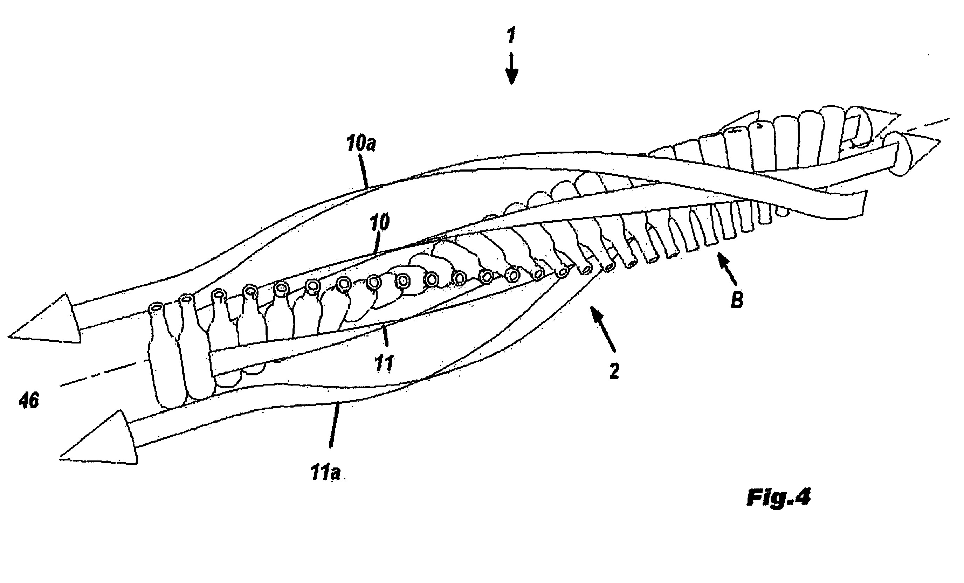

Schliesslich ist aus der US 5,492,216 ein Förderer zum horizontalen Transportieren von Glasflaschen bekannt, der mit zwei umlaufenden Förderriemen versehen ist, die auf der Innenseite eine Verzahnung aufweisen. Um den Abstand zwischen den beiden Förderriemen möglichst konstant zu halten, ist auf der Innenseite des jeweiligen Förderriemens ein zusätzlicher Zahnriemen angeordnet, dessen Zähne in die Zähne des Förderriemens eingreifen. In den Fig. 4 und 5 wird zudem ein nach dem Stand der Technik gestalteter Schleppkettenförderer beschrieben, bei dem an der jeweiligen Kette rohrförmige Greifer angeordnet sind, welche quer zur Förderrichtung elastisch nachgiebig gestaltet sind.

Ausgehend vom bekannten Stand der Technik besteht die Aufgabe der Erfindung darin, eine Fördervorrichtung zum Transportieren von einseitig offenen Behältern zu schaffen, welche einfach aufgebaut und universell einsetzbar ist.

Diese Aufgabe wird mit einer Vorrichtung gelöst, welche die im Anspruch 1 in Kombination angeführten Merkmale aufweist.

Eine mit den vorgeschlagenen Merkmalen versehene Fördervorrichtung eignet sich für vielfältigste Einsatzzwecke. Indem die Greifelemente mittels Führungsschienen geführt werden, und nicht etwa das jeweilige Fördermittel, kann eine vorbestimmte Orientierung und Lage der Behälter sehr genau eingehalten werden, so dass auf zusätzliche Führungsmittel, wie sie beispielsweise in der US 4,479,574 offenbart sind, verzichtet werden kann. Ausserdem eignen sich die beanspruchten Greifelemente um Behälter mit unterschiedlichen Durchmessern und unterschiedlichen Formen aufzunehmen.

Indem der Abstand zwischen den angrenzenden Lippen benachbarter Greifelemente zumindest annähernd dem Abstand zwischen den einzelnen Lippen eines Greifelements entspricht, wird ein Fördermittel gebildet, das quasi mit einer endlosen Aneinanderreihung von Greifelementen bzw. Lippen versehen ist. Daher spielt es keine Rolle, ob der zu transportierenden Behälter auf der jeweiligen Seite nur von den Lippen eines einzelnen Greifelements erfasst wird oder ob er von den Lippen von zwei benachbarten Greifelementen erfasst wird. Das heisst mit anderen Worten, die Behälter brauchen nicht in Relation zu den Greifelementen in die Fördervorrichtung eingetaktet zu werden, sondern sie können unabhängig von der Position der einzelnen Greifelemente und in beliebigem Abstand zueinander an die Fördervorrichtung übergeben werden.

Ein Ausführungsbeispiel der Erfindung wird nachfolgend anhand von Zeichnungen näher erläutert. In diesen Zeichnungen zeigt:
Fig. 1 eine Draufsicht auf eine schematisch dargestellte Fördervorrichtung;
Fig. 2 eine vergrösserte Darstellung des Einlaufbereichs der Fördervorrichtung gemäss Fig. 1;
Fig. 3 einen Querschnitt durch die Fördervorrichtung;
Fig. 4 eine schematische Darstellung des Einlaufbereichs der Fördervorrichtung.

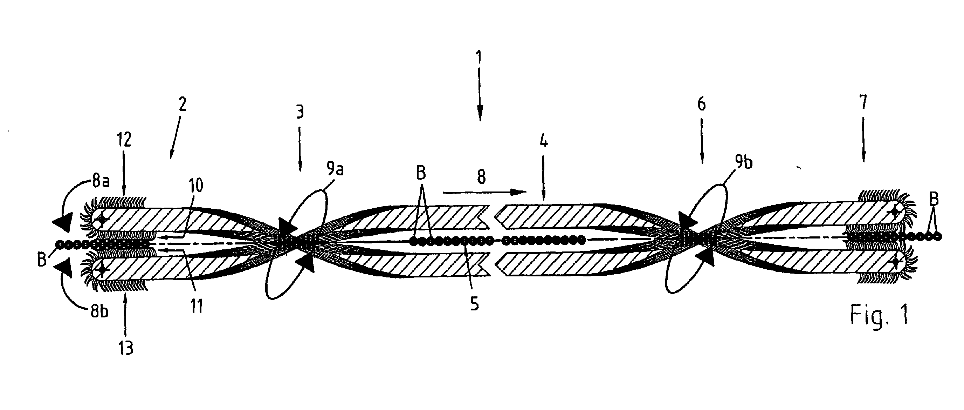

Aus der Darstellung gemäss Fig. 1 ist die schematisch dargestellte Fördervorrichtung in einer Draufsicht ersichtlich. Die gesamthaft mit 1 bezeichnete Fördervorrichtung dient im vorliegenden Fall dem Zu- und Abführen von einseitig offenen Behältern B zu einer Behandlungsstation 5, welche beispielsweise als Reinigungsanordnung ausgebildet sind kann. Derartige Reinigungsanordnungen sind in der Fachsprache unter dem Begriff "Rinser" bekannt. Die Fördervorrichtung 1 weist zwei beabstandete und als Endlosschlaufen ausgebildeten Fördermittel 10, 11 auf, welche mit einer Vielzahl von Greifelementen 12, 13 zum seitlichen Erfassen und Transportieren der Behälter ausgebildet sind. Die beiden Fördermittel sind über nicht näher dargestellte Mittel angetrieben und miteinander synchronisiert. Die Fördervorrichtung 1 umfasst einen Einlaufabschnitt 2, einen Auslaufabschnitt 7 und einen dazwischen angeordneten Behandlungsabschnitt 4. Der eingangsseitige wie auch der ausgangsseitige Anschlussförderer sind zugunsten einer übersichtlichen Darstellung nicht eingezeichnet. Am Eingang der Fördervorrichtung 1, d.h. vor dem Einlaufabschnitt 2, befinden sich die Behälter B in der aufrechten Ausgangsstellung, in der die jeweilige Behälteröffnung nach oben gerichtet ist. Die Behandlungsstation 5 weist eine Mehrzahl von entlang des Behandlungsabschnitts 4 angeordnete Strahldüsen (nicht dargestellt) zum Ausblasen oder Ausspülen der Behälter B auf. Die grundsätzliche Förderrichtung der Fördervorrichtung 1 ist durch einen Pfeil 8 angedeutet und die Drehrichtung der beiden Fördermittel am Anfang des Einlaufabschnitts 2 durch Pfeile 8a und 8b. Der Einlaufabschnitt 2 weist einen wendelförmig ausgebildeten Bereich 3 auf, in dem die Behälter B entlang einer in Förderrichtung 8 verlaufenden Längsmittenachse von der aufrechten Ausgangsstellung um 180° in eine Austropfstellung gedreht werden, wie dies durch die Pfeile 9a angedeutet ist. Nach dem Drehen der Behälter B ist die jeweilige Behälteröffnung vertikal nach unten gerichtet. Der dem Einlaufabschnitt 2 folgende Behandlungsabschnitt 4 ist nur teilweise dargestellt. In Wirklichkeit erstreckt sich dieser Behandlungsabschnitt 4 nach der eigentlichen Behandlungsstation 5 noch über mehrere Meter hinweg, so dass die in der Behandlungsstation 5 mit einer Flüssigkeit ausgespülten Behälter B in dem nachfolgenden, geradlinig verlaufenden Bahnabschnitt austropfen können. Der Auslaufabschnitt 7 weist am Anfang ebenfalls einen wendelförmig ausgebildeten Bereich 6 auf, in dem die Behälter B entlang der in Förderrichtung 8 verlaufenden Längsmittenachse von der Austropfstellung um 180° in eine aufrechte Abfüllstellung zurückgedreht werden, wie diese durch die Pfeile 9b angedeutet ist. Bei den im Auslaufabschnitt 7 dargestellten Behältern B ist die jeweilige Behälteröffnung wieder nach oben gerichtet. In dieser Abfüllstellung können die Behälter B einer nachfolgenden Abfüllstation zugeführt werden, wobei die Abfüllstation nicht dargestellt ist. Es versteht sich, dass die Drehrichtung im Ein- und Auslaufabschnitt 2, 7 nicht identisch sein muss.

Die Greifelemente 12, 13 des jeweiligen Fördermittels 10, 11 sind mittels einer Kette miteinander verbunden und bilden zusammen einen sogenannten Schleppkettenförderer. Zum Führen der Greifelemente 12, 13 sind Führungsschienen vorgesehen, welche aus dieser Darstellung nicht ersichtlich sind. Die Führungsschienen führen die Greifelemente entlang einer vorgegebenen Bahn. Sie verlaufen am Ende des Einlaufabschnitts 2 und am Anfang des Auslaufabschnitts 7 jeweils wendelförmig, um den Greifelementen 12, 13 einen entsprechenden Verlauf aufzuzwingen. Am Ende des Einlaufabschnitts 2 wird den Greifelementen 12, 13 durch die wendelförmige Gestaltung der Führungsschienen eine Drehung entlang der Längsachse um 180° aufgezwungen, so dass die zu transportierenden Behälter B ebenfalls eine Drehung um 180° vollführen. Durch die Führung der Greifelemente 12, 13 mittels Schienen kann sichergestellt werden, dass der Abstand zwischen einander gegenüberliegenden Greifelementen auch während des Drehens konstant bleibt, und die Stirnseiten von einander gegenüberliegenden Greifelementen 12, 13 immer parallel verlaufen, so dass keine Relatiwerschiebung zwischen den Behältern B und den Greifelementen 12, 13 stattfindet. Dadurch kann auf zusätzliche Führungsmittel verzichtet werden.

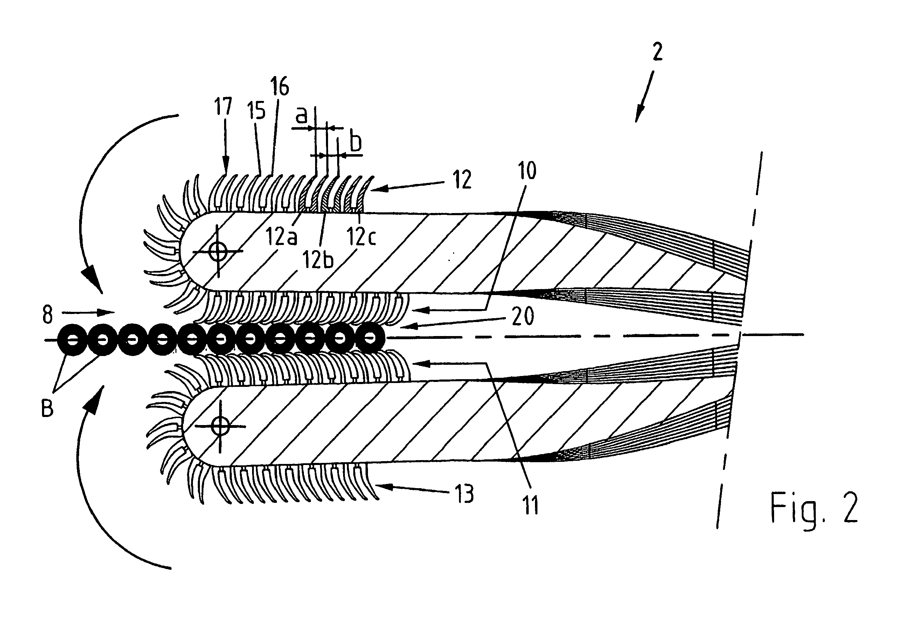

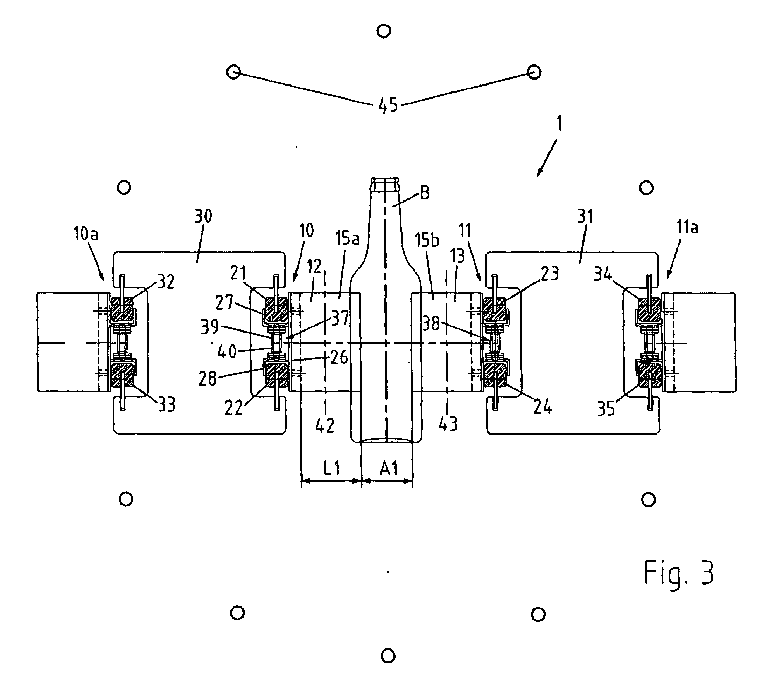

Wie aus der vergrösserten Darstellung des Einlaufabschnitts 2 gemäss Fig. 2 ersichtlich ist, weist jedes Greifelement 12 zwei in Förderrichtung beabstandete Lippen 15, 16 mit parallel zueinander verlaufenden Stirnseiten auf. Die jeweilige Stirnseite 17 der Lippen 15, 16 ist im wesentlichen linienförmig gestaltet, so dass eine linienförmige Berührung zwischen den Lippen und dem zu transportierenden Behälter B stattfindet. Die Lippenlängsachse verläuft im wesentlichen quer zur Förderrichtung 8. Anstelle von zwei Lippen 15, 16 können natürlich auch drei oder mehr Lippen pro Greifelement 12a, 12b, 12c vorgesehen werden. Die einzelnen Greifelemente 12a, 12b, 12c sind soweit voneinander beabstandet, dass der Abstand b zwischen den angrenzenden Lippen benachbarter Greifelemente 12a, 12b zumindest annähernd dem Abstand a zwischen den einzelnen Lippen eines Greifelements 12a entspricht. Der besseren Übersichtlichkeit wegen wurde vorgängig auf die aussen liegenden Greifelemente 12a, 12b, 12c Bezug genommen. Es versteht sich jedoch, dass sich die Verhältnisse bezüglich des Abstands b zwischen den angrenzenden Lippen benachbarter Greifelemente und des Abstands a zwischen den einzelnen Lippen eines Greifelements auf der Innenseite 20 der einander gegenüberliegenden Fördermittel im Bereich der zu transportierenden Behältnisse B1 gleich darstellen. Dadurch werden Fördermittel 10, 11 gebildet, die quasi mit einer endlosen Aneinanderreihung von Greifelementen 12, 13 bzw. Lippen 15, 16 versehen ist. Die Lippen 15, 16 der Greifelemente 12, 13 sind entgegen der Förderrichtung 8 derart nach hinten gebogen, dass sie sowohl quer zur Förderrichtung 8 wie auch entgegen der Förderrichtung 8 elastisch nachgiebig sind. Der Abstand zwischen den Lippenenden von einander gegenüberliegenden Greifelementen 12, 13 entspricht höchstens dem Doppelten der Länge einer Lippe quer zur Förderrichtung, wie nachfolgend anhand der Fig. 3 noch näher erläutert wird. Dadurch wird erreicht, dass Behälter B mit unterschiedlichen Durchmessern sicher erfasst und transportiert werden können. Im konkreten Fall können beispielsweise Behälter mit Durchmessern zwischen 40 und ca. 110 mm. Jedenfalls sind die Lippen 15, 16 derart ausgebildet, dass die zum elastischen Auslenken der Lippen 15, 16 benötigte Kraft im wesentlichen unabhängig von der Grösse der Auslenkung ist. Dies ist u.a. beim Transportieren von Kunststoffbehältern mit geringer Wanddicke wie beispielsweise PET-Flaschen wichtig, damit insbesondere bei Behältern mit grossem Durchmesser die Behälter bzw. deren Wände von den Lippen nicht deformiert werden.

Die Fig. 3 zeigt einen Querschnitt durch die Fördervorrichtung 1 entlang eines geradlinig verlaufenden Abschnitts. Aus dieser Darstellung sind die beiden Fördermittel 10, 11 ersichtlich, welche mit einer Vielzahl von Greifelementen 12, 13 versehen sind.

Zum Führen der Greifelemente 12, 13 sind Führungsschienen 21, 22, 23, 24 vorgesehen. Diese Führungsschienen 21, 22, 23, 24 sind an scheibenförmigen Tragelementen 30, 31 befestigt, welche in bestimmten Abständen angeordnet und mittels andeutungsweise dargestellten Verstrebungen 45 miteinander verbunden sind. Auf der Aussenseite jedes Tragelements 30, 31 sind ebenfalls Führungsschienen 32, 33, 34, 35 angeordnet, welche zum Rückführen des äusseren Trums 10a, 11a des jeweiligen Fördermittels 10, 11 vorgesehen sind. Die Greifelemente 12, 13 weisen jeweils einen Grundkörper 26 auf, der mit zwei L-förmigen Tragarmen 27, 28 versehen ist, wovon jeder eine Führungsschiene 21, 22 teilweise umgreift. Zum Ziehen der Greifelemente 12, 13 weist jedes Fördermittel 10, 11 eine Schleppkette 37, 38 (Seitenbogenkette) auf, an welcher die Grundkörper 26 kraftschlüssig fixiert sind. Die einzelnen Kettenglieder der jeweiligen Schleppkette 37 sind mittels in Buchsen 39 geführten Bolzen 40 miteinander verbunden. Um die Schleppkette 37 in Längsrichtung (Förderrichtung) verdrehen zu können, ist zwischen den Buchsen 39 und den Bolzen 40 Spiel vorhanden. Aus dieser Darstellung ist zudem ersichtlich, dass keine weiteren Führungselemente zum Führen der Behälter B (Flaschen) vorgesehen sind, sondern dass die Förderung und Führung der Behälter B ausschliesslich durch die Greifelemente 12, 13 erfolgt. Die Lippen 15a, 15b der Greifelemente 12, 13 sind aus einem elastischen Material gefertigt, das derart auf die zu transportierenden Behälter B abgestimmt ist, dass eine hohe Haftreibung zwischen dem jeweiligen Greifelement 12, 13 und dem zu transportierenden Behälter B sichergestellt wird, so dass beim Transport der Behälter B keine Relativbewegung zwischen den Lippen der Greifelemente 12, 13 und dem jeweiligen Behälter B entsteht. Wie bereits erläutert, entspricht der Abstand A1 zwischen den Lippenenden von einander gegenüberliegenden Greifelementen 12, 13 höchstens dem Doppelten der Länge L1 einer Lippe 15a quer zur Förderrichtung. Im konkreten Fall ist die Länge L1 der jeweiligen Lippen 15a um einige Millimeter grösser als der Abstand A1 zwischen den Lippenenden von einander gegenüberliegenden Greifelementen 12, 13. Mit dem Bezugszeichen 42 ist die Lippenlängsachse des linken Greifelements 12 bezeichnet, während die Lippenlängsachse des rechten Greifelements 13 das Bezugszeichen 43 trägt.

Anstelle eines konventionellen Schleppkettenförderers kann beispielsweise auch eine Fördervorrichtung vorgesehen werden, die eine Vielzahl von geschobenen, gestossenen oder gezogenen Greifelementen aufweist. Auch in diesem Fall werden die Greifelemente vorzugsweise in einer endlos umlaufenden Bahn angeordnet. Der Antrieb dieser Mitnehmerelemente kann beispielsweise mittels eines umlaufenden Seils erfolgen, an dem form- oder kraftschlüssig an den Mitnehmerelementen angreifende Formteile angeordnet sind. Solche Mitnehmerelemente haben den Vorteil, dass sie sich sehr einfach spiralförmig zu einem Einlaufabschnitt 2 oder Auslaufabschnitt 7 (Fig. 1) umlenken lassen. Aber auch eine mechanische Kopplung der Greifelemente ist möglich, indem die Greifelemente nicht direkt miteinander verbunden sind, sondern das eine Greifelemente das andere vor sich herschiebt.

Fig. 4 zeigt schliesslich schematisch das Ende des Einlaufbereichs. Aus dieser Darstellung ist ersichtlich, wie die Behälter B im Einlaufbereich 2 um 180° um die Längsachsmittenachse 46 der Fördervorrichtung 1 verdreht werden. Die Fördermittel 10, 11 bzw. 10a, 11a sind in diesem Fall nur andeutungsweise eingezeichnet. Der Drehpunkt des jeweiligen Behälters B bleibt dabei exakt auf einer Längsmittenachse 46 der Fördervorrichtung 1.

Es versteht sich, dass das vorgängig gezeigte Ausführungsbeispiel lediglich beispielhaften Charakter besitzt und keinesfalls als abschliessend zu betrachten ist. So kann beispielsweise anstelle oder in Ergänzung zur Reinigungsanordnung 5, ein als Entleerabschnitt ausgebildeter Behandlungsabschnitt vorgesehen werden, in dem ggf. in den Behältern aufgenommene Flüssigkeiten der Schwerkraft folgend abfliessen können. Ebenso kann anstelle einer als Reinigungsanordnung ausgebildeten Behandlungsstation eine Sterilisationsstation, eine Aufheizstation oder eine Auffangstation zum Auffangen des Inhalts von sich entleerenden Behältern vorgesehen werden.

Anstelle der hier dargestellten, horizontal verlaufenden Fördervorrichtung 1 kann diese bzw. einzelne Abschnitte davon, zur Überbrückung von Höhenunterschieden, natürlich ebenso schräg oder vertikal verlaufend ausgebildet werden. Der Platzbedarf der hier gezeigten Ein- bzw. Auslaufabschnitte ist im Vergleich zu konventionellen Ein- bzw. Auslaufabschnitten sehr gering. Zudem sind die Ein- und Auslaufabschnitte vergleichsweise einfach aufgebaut und günstig in der Herstellung. Es versteht sich, dass die Behälter nicht zwingend um 180° gedreht werden müssen, sondern dass beispielsweise auch ein Drehung von 150° genügt, damit die Behälteröffnung nach unten zu liegen kommt und sich der Behälter zwangsläufig und vollständig entleert. Vorzugsweise wird der Behälter im Einlaufabschnitt daher um ca. 150° bis 210° und im Auslaufabschnitt wieder um den entsprechenden Betrag in die Abfüllposition zurückgedreht.

## Patentansprüche

1. Fördervorrichtung (1) zum Transportieren von einseitig offenen Behältern (B), mit zumindest zwei einander gegenüberliegenden Fördermitteln (10, 11) zum kraft-und/oder formschlüssigen Erfassen der Behälter (B), mit einem Einlaufabschnitt (2), einem Auslaufabschnitt (7) und einem dazwischen angeordneten Behandlungsabschnitt (4), wobei die Behälter (B) im Einlaufabschnitt (2) von einer Ausgangsposition in eine Behandlungsposition und im Auslaufabschnitt (7) von der Behandlungsposition in eine Abfüllposition gedreht werden, und wobei jedes Fördermittel (10, 11) mit einer Vielzahl von mittels Führungsschienen (21, 22, 23, 24) geführten Greifelementen (12, 13) versehen ist und die Führungsschienen (21, 22, 23, 24) im Einlaufabschnitt (2) und/oder Auslaufabschnitt (3) wendelförmig gestaltet sind, um die Greifelemente derart zu führen, dass die zu fördernden Behälter (10) entlang einer in Förderrichtung (8) verlaufenden Längsmittenachse (7) in die Behandlungsposition gedreht bzw. aus der Behandlungsposition in die Abfüllposition gedreht werden, und wobei jedes Greifelement (12, 13) mit zumindest zwei in Förderrichtung (8) beabstandeten und zumindest quer zur Förderrichtung elastisch nachgiebigen Lippen (15a, 15b) versehen ist, um die Behälter (B) seitlich zu erfassen, und wobei die Greifelemente (12, 13) zum Fördern und Führen der Behälter (B) ausgebildet sind und wobei der Abstand zwischen den Lippenenden (A1) von einander gegenüberliegenden Greifelementen (12, 13) höchstens dem Doppelten der Länge (L1) einer Lippe (15a) quer zur Förderrichtung entspricht.

2. Fördervorrichtung nach Anspruch 1, wobei die Förderung und Führung der Behälter (B) ausschliesslich durch die Greifelemente (12, 13) erfolgt

3. Fördervorrichtung nach Anspruch 1 oder 2, wobei der Abstand (b) zwischen den angrenzenden Lippen benachbarter Greifelemente (12a, 12b) zumindest annähernd dem Abstand (a) zwischen den einzelnen Lippen eines Greifelements (12a) entspricht.

4. Fördervorrichtung nach einem der vorhergehenden Ansprüche, wobei die Lippen (15, 16) mit im wesentlichen linienförmig ausgebildeten Stirnseiten (17) versehen sind, welche parallel zueinander verlaufen.

5. Fördervorrichtung nach einem der vorhergehenden Ansprüche, wobei die Lippen (15, 16) der Greifelemente (12) entgegen der Förderrichtung (8) derart nach hinten gebogen oder schräg ausgebildet sind, dass sie sowohl quer zur Förderrichtung (8) wie auch entgegen der Förderrichtung (8) elastisch nachgiebig sind.

6. Fördervorrichtung (1) nach einem der vorhergehenden Ansprüche, wobei die jeweilige Lippenlängsachse (42, 43) im wesentlichen senkrecht zur Förderrichtung verläuft.

7. Fördervorrichtung (1) nach einem der vorhergehenden Ansprüche, wobei die Lippen (15, 16) derart ausgebildet sind, dass die zum elastischen Auslenken der Lippen (15, 16) benötigte Kraft im wesentlichen unabhängig von der Grösse der Auslenkung ist.

8. Fördervorrichtung (1) nach einem der vorhergehenden Ansprüche, wobei die Fördervorrichtung (1) Mittel zum Ziehen (37, 38) oder Stossen der Greifelemente (12, 13) aufweist.

9. Fördervorrichtung nach Anspruch 8, wobei als Mittel zum Ziehen der Greifelemente (12, 13) eine Schleppkette (37, 38) vorgesehen ist, an welcher die Greifelemente (12, 13) kraftschlüssig befestigt sind.

10. Fördervorrichtung nach Anspruch 9, wobei die einzelnen Kettenglieder der Schleppkette (37, 38) mittels in Buchsen (39) geführten Bolzen (38) miteinander verbunden sind, wobei zwischen den Buchsen (39) und den Bolzen (38) soviel Spiel vorhanden ist, dass die Schleppkette (37, 38) im Einlaufabschnitt (2) und/oder Auslaufabschnitt (7) um ihre Längsachse verdrehbar ist.

11. Fördervorrichtung nach Anspruch 9 oder 10, wobei die jeweilige Schleppkette (37, 38) in Form einer endlos umlaufenden Schleife ausgebildet ist.

12. Fördervorrichtung nach einem der Ansprüche 9 bis 11, wobei sowohl der Einlaufabschnitt (2) wie auch der Auslaufabschnitt (7) mit einem wendelförmig ausgebildeten Bereich (3, 6) zum Verdrehen der Behälter (10) versehen sind.

13. Fördervorrichtung nach einem der Ansprüche 9 bis 12, wobei der Einlaufabschnitt (2) und/oder der Behandlungsabschnitt (4) und/oder Auslaufabschnitt (7) in Förderrichtung schräg verlaufen und zum Überwinden von Höhendifferenzen ausgebildet ist/sind.

14. Fördervorrichtung nach einem der Ansprüche 9 bis 13, wobei die Behälter (10) im Einlaufabschnitt (2) soweit gedreht werden, dass ihre Öffnung nach unten zu liegen kommt.

15. Fördervorrichtung nach einem der Ansprüche 9 bis 14, wobei die Behälter (10) im Einlaufabschnitt (2) um 150° bis 210° gedreht und im Auslaufabschnitt (7) um denselben Betrag wieder zurück in die Abfüllposition gedreht werden.

16. Fördervorrichtung nach einem der Ansprüche 9 bis 15, wobei der Behandlungsabschnitt (4) als Entleerabschnitt ausgebildet ist, in dem ggf. in den Behältern aufgenommene Flüssigkeiten der Schwerkraft folgend abfliessen können.

17. Fördervorrichtung nach einem der Ansprüche 9 bis 16, wobei der Einlaufabschnitt (2) einen wendelförmig ausgebildeten Bereich (3) aufweist, in dem die Behälter (10) aus einer aufrechten Ausgangsstellung um 150°-180° in eine Austropfstellung gedreht werden und dass der Auslaufabschnitt (7) einen spiralförmig ausgebildeten Bereich (6) aufweist, in dem die Behälter aus der Austropfstellung um denselben Betrag wieder in die Ausgangsstellung zurückgedreht werden.

18. Verwendung der nach einem der Ansprüche 1 bis 17 ausgebildeten Fördervorrichtung (1) zum Zuführen von Getränkeflaschen zu einer Behandlungsstation, insbesondere zu einer Reinigungsstation (5).

## Claims

1. Conveying apparatus (1) for transporting containers (B) which are open on one side, having at least two mutually opposite conveying means (10, 11) for gripping the containers (B) in a force-fitting and/or form-fitting manner, having an entry section (2), an exit section (7) and a treatment section (4) arranged therebetween, where the containers (B) in the entry section (2) are rotated from a starting position into a treatment position and those in the exit section (7) are rotated from the treatment position into a filling position, and where each conveying means (10, 11) is provided with a multiplicity of gripping elements (12, 13) guided by means of guide rails (21, 22, 23, 24) and the guide rails (21, 22, 23, 24) in the entry section (2) and/or exit section (3) are of helical configuration in order to guide the gripping elements such that the containers (B) which are to be conveyed are rotated, along a longitudinal centre axis (7) running in the conveying direction (8), into the treatment position and out of the treatment position into the filling position, and where each gripping element (12, 13) is provided with at least two lips (15a, 15b), which are spaced apart in the conveying direction (8) and are elastically compliant at least transversely to the conveying direction, for the purpose of gripping the containers (B) laterally, and where the gripping elements (12, 13) are designed for conveying and guiding the containers (B), and where the spacing between the lip ends (A1) of mutually opposite gripping elements (12, 13) corresponds, at most, to double the length (L1) of a lip (15a) in the direction transverse to the conveying direction.

2. Conveying apparatus according to Claim 1, where the operations of conveying and guiding the containers (B) take place exclusively by way of the gripping elements (12, 13).

3. Conveying apparatus according to Claim 1 or 2, where the spacing (b) between the adjacent lips of neighbouring gripping elements (12a, 12b) corresponds at least more or less to the spacing (a) between the individual lips of a gripping element (12a).

4. Conveying apparatus according to one of the preceding claims, where the lips (15, 16) are provided with essentially linear end sides (17) which run parallel to one another.

5. Conveying apparatus according to one of the preceding claims, where the lips (15, 16) of the gripping elements (12) are designed to be curved rearwards or obliquely counter to the conveying direction (8) such that they are elastically compliant both transversely to the conveying direction (8) and counter to the conveying direction (8).

6. Conveying apparatus (1) according to one of the preceding claims, where the respective longitudinal lip axis (42, 43) runs essentially perpendicularly to the conveying direction.

7. Conveying apparatus (1) according to one of the preceding claims, where the lips (15, 16) are designed such that the force which is required for deflecting the lips (15, 16) elastically is essentially independent of the magnitude of the deflection.

8. Conveying apparatus (1) according to one of the preceding claims, where the conveying apparatus (1) has means for pulling (37, 38) or pushing the gripping elements (12, 13).

9. Conveying apparatus according to Claim 8, where the means provided for pulling the gripping elements (12, 13) is a drag chain (37, 38) on which the gripping elements (12, 13) are fastened in a force-fitting manner.

10. Conveying apparatus according to Claim 9, where the individual links of the drag chain (37, 38) are connected to one another by means of bolts (38) guided in bushings (39), the amount of play between the bushings (39) and the bolts (38) being sufficient for the drag chain (37, 38) to be rotatable about its longitudinal axis in the entry section (2) and/or exit section (7).

11. Conveying apparatus according to Claim 9 or 10, where the respective drag chain (37, 38) is designed in the form of an endlessly circulating loop.

12. Conveying apparatus according to one of Claims 9 to 11, where both the entry section (2) and the exit section (7) are provided with a helically designed region (3, 6) for rotating the containers (B).

13. Conveying apparatus according to one of Claims 9 to 12, where the entry section (2) and/or the treatment section (4) and/or the exit section (7) run/runs obliquely in the conveying direction and are/is designed for overcoming differences in height.

14. Conveying apparatus according to one of Claims 9 to 13, the containers (B) in the entry section (2) being rotated to the extent where their opening ends up located in the downward direction.

15. Conveying apparatus according to one of Claims 9 to 14, where the containers (B) in the entry section (2) are rotated by 150° to 210° and those in the exit section (7) are rotated by the same amount back into the filling position.

16. Conveying apparatus according to one of Claims 9 to 15, where the treatment section (4) is designed as an emptying section in which any liquids which may be accommodated in the containers can flow out under gravitational force.

17. Conveying apparatus according to one of Claims 9 to 16, where the entry section (2) has a helically designed region (3) in which the containers (B) are rotated by 150°-180° from an upright starting position into a dripping position, and in that the exit section (7) has a helically designed region (6) in which the containers are rotated by the same amount from the dripping position back into the starting position.

18. Use of the conveying apparatus (1) designed according to one of Claims 1 to 17 for the purpose of feeding drinks bottles to a treatment station, in particular to a cleaning station (5).

## Revendications

1. Convoyeur (1) destiné à transporter des récipients ouverts sur un côté (B) avec au moins deux moyens de transport opposés l'un à l'autre (10, 11) pour saisir les récipients (B) par adhérence et/ou par engagement positif, avec une section d'introduction (2), une section de sortie (7), entre lesquelles est disposée une section de traitement (4), les récipients (B) étant tournés, dans la section d'introduction (2) d'une position de départ vers une position de traitement et, dans la section de sortie (7), d'une position de traitement vers une position de remplissage, chaque moyen de transport (10, 11) étant pourvu d'une multitude d'éléments préhenseurs (12, 13) guidés au moyen de rails de guidage (21, 22, 23, 24) et les rails de guidage (21, 22, 23, 24) étant conçus hélicoïdaux dans la section d'introduction (2) et/ou dans la section de sortie (3), afin de guider les éléments préhenseurs de manière que les récipients à transporter (10) soient tournés le long d'un axe longitudinal médian (7) s'étendant dans le sens de convoyage (8) dans la position de traitement ou hors de la position de traitement, dans la position de remplissage, chaque élément préhenseur (12, 13) étant pourvu d'au moins deux lèvres (15a, 15b), qui sont écartées dans le sens de convoyage et qui sont élastiques et déformables transversalement au sens de convoyage, afin de saisir les récipients (B) sur le côté, les éléments préhenseurs (12, 13) étant conçus pour convoyer et guider les récipients (B) et l'écart entre les extrémités des lèvres (A1) d'éléments préhenseurs opposés l'un à l'autre (12, 13) correspondant au maximum au double de la longueur (L1) d'une lèvre (15a) transversalement au sens de convoyage.

2. Convoyeur suivant la revendication 1, le convoyage et le guidage des récipients (B) ayant lieu exclusivement par les éléments préhenseurs (12, 13).

3. Convoyeur suivant la revendication 1 ou 2, l'écart (b) entre les lèvres adjacentes d'éléments préhenseurs (12a, 12b) voisins correspondant au moins approximativement à l'écart (a) entre les différentes lèvres d'un élément préhenseur (12a).

4. Convoyeur suivant une des revendications précédentes, les lèvres (15, 16) étant pourvues de faces (17) qui sont conçues essentiellement linéaires et qui s'étendent parallèlement l'une par rapport à l'autre.

5. Convoyeur suivant une des revendications précédentes, les lèvres (15, 16) des éléments préhenseurs (12) étant pliées vers l'arrière dans le sens opposé à celui du convoyage (8) ou conçues diagonales de manière à ce qu'elles soient élastiques et déformables aussi bien transversalement au sens de convoyage (8) que dans le sens opposé au sens de convoyage (8).

6. Convoyeur (1) suivant une des revendications précédentes, l'axe longitudinal de lèvre respectif (42, 43) s'étendant essentiellement perpendiculairement au sens de convoyage.

7. Convoyeur (1) suivant une des revendications précédentes, les lèvres (15, 16) étant conçues de manière que la force nécessaire à l'excursion élastique des lèvres (15, 16) soit essentiellement indépendante de la grandeur de l'excursion.

8. Convoyeur (1) suivant une des revendications précédentes, le convoyeur (1) présentant des moyens pour tirer (37, 38) ou pour pousser les éléments préhenseurs (12, 13).

9. Convoyeur suivant la revendication 8, une chaîne d'entraînement (37, 38), sur laquelle sont fixés, par adhérence, les éléments préhenseurs (12, 13), étant prévue comme moyen pour tirer les éléments préhenseurs (12, 13).

10. Convoyeur suivant la revendication 9, les différents maillons de la chaîne d'entraînement (37, 38) étant reliés entre eux au moyen de boulons (39) guidés dans des douilles (39), entre les douilles (39) et les boulons (38) existant un jeu aussi grand pour que la chaîne d'entraînement (37, 38) puisse être tournée autour de son axe longitudinal dans la section d'introduction (2) et/ou dans la section de sortie (7).

11. Convoyeur suivant la revendication 9 ou 10, la chaîne d'entraînement respective (37, 38) étant conçue en forme de boucle tournante sans fin.

12. Convoyeur suivant une des revendications 9 à 11, aussi bien la section d'introduction (2) que la section de sortie (7) étant pourvues d'une zone (3, 6) conçue hélicoïdale pour tourner les récipients (10).

13. Convoyeur suivant une des revendications 9 à 12, la section d'introduction (2) et/ou la section de traitement (4) et/ou la section de sortie (7) s'étendant diagonalement dans le sens de convoyage et étant d'une conception à surpasser les différences de hauteur.

14. Convoyeur suivant une des revendications 9 à 13, les récipients (10) étant, dans la section d'introduction (2), tournés d'autant que leur ouverture se pose en bas.

15. Convoyeur suivant une des revendications 9 à 14, les récipients (10) étant, dans la section d'introduction (2), tournés de 150° à 210°, et, dans la section de sortie (7), retournés d'autant en position de remplissage.

16. Convoyeur suivant une des revendications 9 à 15, la section de traitement (4) étant conçue comme section d'évacuation, dans laquelle du liquide contenu, le cas échéant, dans les récipients peut s'écouler en raison de la pesanteur.

17. Convoyeur suivant une des revendications 9 à 16, la section d'introduction (2) présentant une zone (3) conçue hélicoïdale, dans laquelle les récipients (10) sont tournés à partir d'une position de départ debout, de 150° à 180°, dans une position d'égouttement et la section de sortie (7) présentant une zone (6) conçue hélicoïdale, dans laquelle les récipients sont retournés, d'autant, de la position d'égouttement dans la position de départ.

18. Utilisation d'un convoyeur (1) conçu suivant une des revendications 1 à 17 destiné à amener des bouteilles à boissons à une station de traitement, en particulier à une station de nettoyage (5).
